# EUROPEAN PATENT SPECIFICATION

(11) **EP 2 757 643 B1**
(45) Date of publication and mention of the grant of the patent: **05.08.2015**
(21) Application number: 14150884.6
(22) Date of filing: 13.01.2014
(51) Int. Cl.: H02G 3/04

(54) **Modular structure for horizontal and vertical wired walls for the building industry and walls equipped with said structure**
Modulare Struktur für horizontale und vertikale verdrahteten Wände für die Bauindustrie und Wänden damit ausgestattet.
Structure modulaire pour murs cablés horizontaux et verticaux pour l'industrie du bâtiment et murs en étant équipés.

(30) Priority: 21.01.2013 IT MI20130068
(43) Date of publication of application: 23.07.2014
(73) Proprietor: Giussani, Gianni Battista, 20831 Seregno (IT); Marelli, Pierantonio, 28011 Cesano Maderno (IT)
(72) Inventor: Giussani, Gianni Battista, 20831 Seregno (IT); Marelli, Pierantonio, 28011 Cesano Maderno (IT)
(74) Representative: Rastelli, Franco

(56) References cited:
- EP-A1- 0 596 674
- EP-A1- 1 043 822
- DE-A1- 4 032 473
- US-A- 3 621 635

## Description

The present invention relates to a modular structure particularly suitable for masking horizontal and vertical wired walls for the building industry. The invention is also extended to walls equipped with this modular structure.

The field of invention relates to equipment used for modifying or integrating walls and roofs in the building industry with wiring (electricity, plumbing, air treatment, heating etc..) which are added to or substitute or integrate already existing wiring.

These operations are currently effected through masonry-work interventions, with partial demolition of the roof or existing walls, in order to create tracks for new wiring. These operations, however, have typical drawbacks of masonry-work interventions (noise, formation of powder, disposal problems of debris, restoration of the initial masonry work, etc...) which the state of the art overcomes by resorting to the use of simple wiring ducts which follow the visible route of the wiring and are dry-fixed to the wall by means of specific supports. The known wiring ducts, however, have the disadvantage of leaving the covering means visible, thus disturbing or in any case altering the aesthetical aspect of the wall and roof.

EP 1 043 822 A1 discloses a structure for containing and covering walls, having external wiring and modular means, wherein means for fastening and regulating the inclination of the panel are not provided for.

The main objective of the present invention is to provide a structure suitable for containing and masking new wiring of pre-existing walls and roofs, said structure exerting not only the above-mentioned function of containing and covering or masking, but also that of forming a personalized decorative component of the wall and roof.

Another objective of the invention is to provide a structure of the mentioned type, which is removable, so as to allow inspection of the part of the underlying original wall, in order to effect both further possible modifications or integrations on the wiring, and also routine inspection and maintenance interventions of the same.

A further objective of the invention is to provide a structure of the mentioned type, which can be universally adapted to the covering and containment of tracks having any orientation, within their range of applications to walls in the building industry.

These and other objectives are achieved with the structure and wall according to claims 1 and 6, respectively. Preferred embodiments of the invention are indicated in the remaining claims.

With respect to known embodiments in the field, the structure of the invention offers the advantage of exerting the traditional function of containing and covering new wirings on pre-existing horizontal or vertical walls, also creating a personalized decorative element of said walls.

A further advantage of the invention is also represented by the possibility of temporarily removing the above-mentioned structure, for example for the purpose of ordinary maintenance of the wiring, or for its integration with additional wiring, or to create tracks with different courses, or so forth.

Another advantage is represented by the versatility of the structure of the invention, which, thanks to its modular nature, can be adapted to any form of tracks and walls. In this way, both the times and labour costs normally required for traditional masonry work, are drastically reduced.

These and other objectives, advantages and characteristics are evident from the following description of a preferred embodiment of the structure of the invention, illustrated for non-limiting purposes, in the figures of the enclosed drawings.

In which:
figure 1 illustrates an exploded view of the structure of the invention, in its application mode to a wall;
figure 2 illustrates the structure of figure 1 in section A-A;
figure 3 illustrates an exploded view of the detail of the support of the panel of the structure of the invention;
figure 4 illustrates an exploded and longitudinal sectional view of the structure of figure 1; figure 5 illustrates the structure of figure 4 assembled on a wall;
figure 6 illustrates the detail of the connection and regulation systems between the support of the panel and the respective anchoring section;
figure 7 illustrates a side view of the wall assembly solution of the structure of figure 4;
figures 8 and 9 respectively illustrate an exploded and longitudinal sectional view of a variant of the structure of the previous figures; and
figures 10 and 11 represent examples of walls equipped with the structure of the previous figures, within an application for the building industry.

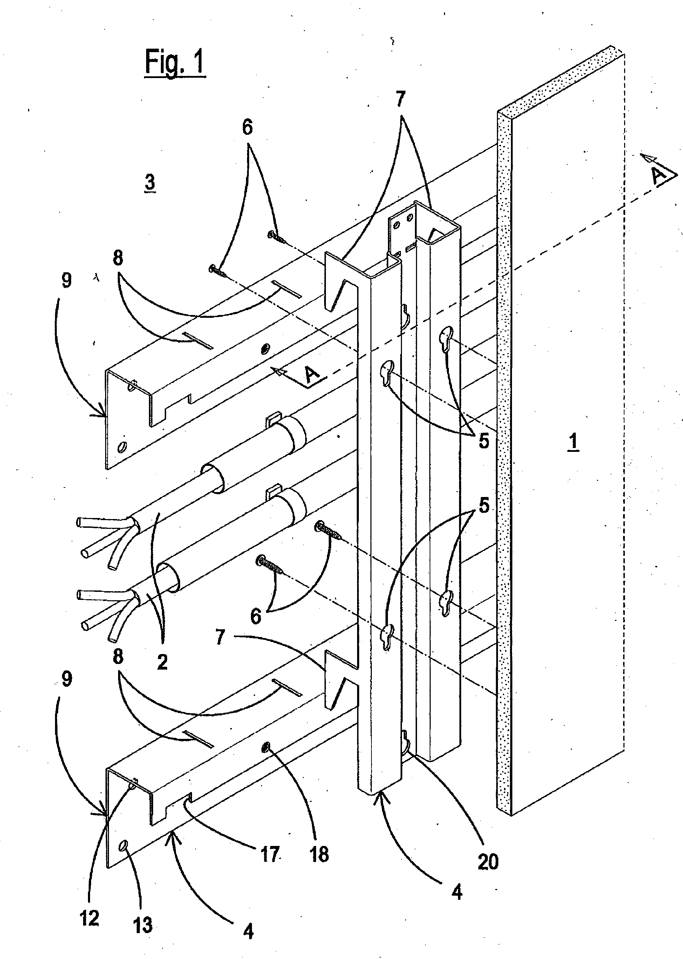

The structure of the invention, illustrated in figure 1, comprises a covering and containment panel 1 for a plurality of wirings 2 applied on a pre-existing wall 3. This panel 1 can be produced with any material, provided it is suitable for the purpose (e.g. wood, cement, glass, plastic, metal, etc.) and can have any form (flat or curved), so as to be adapted to the corresponding profile of the wall 3 to be covered. The wiring 2, on the other hand, can be of any type, for example hydraulic, electric, air treatment, heating and similia.

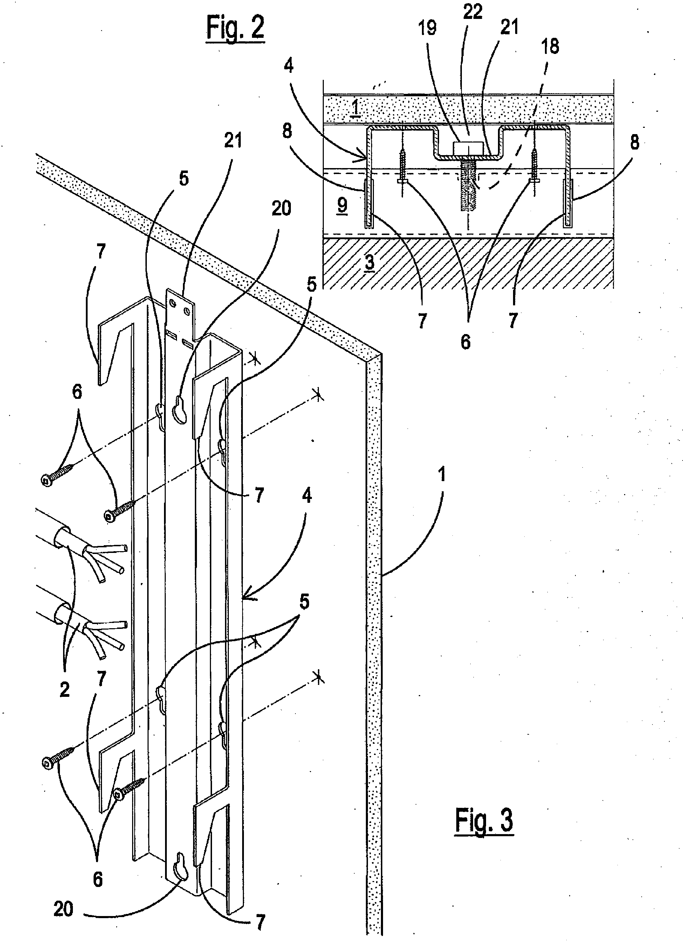

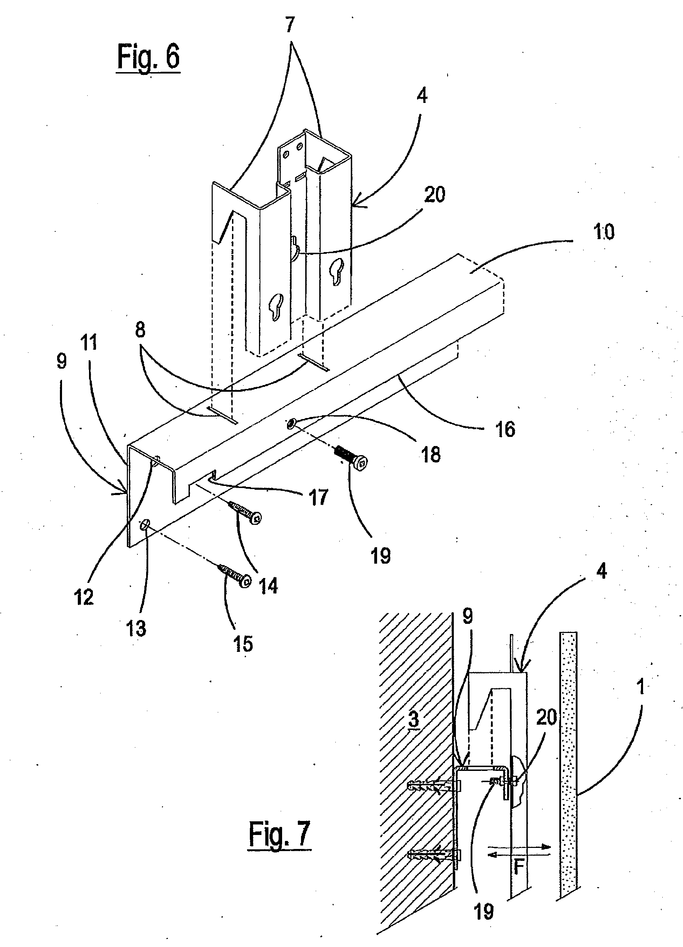

For fixing the panel 1 to the wall 3, the support 4, illustrated in figures 1 to 3, is used, in particular consisting of a profiled section made of metallic material provided, panel side 1, with holes 5 for the passage of screws 6 which serve for reciprocally fixing said panel to the same support 4 and, wall side 3, hooks 7 which fasten said support 4 inside corresponding slots 8, in turn positioned on an anchoring bar 9 of the panel to said wall 3. In particular, this bar 9 has a substantially "L"-shaped section on which the following can be distinguished (figure 6):
- a base 10, equipped with said slots 8;
- a longer branch 11, wall side 3, having holes 12 and 13, for definite anchoring screws 14 and positioning screws 15, respectively; and
- a shorter branch 16, support side 4, having both an exit 17 for access of the screw 14 to the underlying hole 12, and a hole 18 for housing a screw 19 for regulating the relative inclination between the support 4 and the wall 3 (arrows F of figure 7); for this purpose, a corresponding hole 20 is envisaged on said support 4 (figure 3).

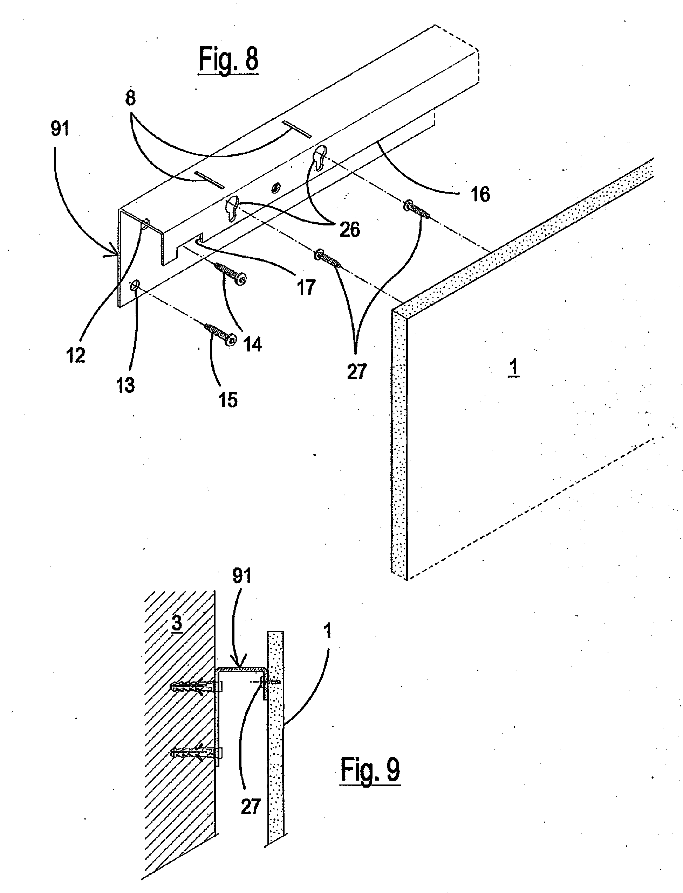

According to the variant illustrated in figures 8 and 9, the assembly of the panel 1 to the wall 3 is effected by means of a structure comprising a bar 91 which, in addition to the holes 8, 12, 13, 18 and the exit 17 of the bar 9 of figure 6, also comprises holes 26 for corresponding screws 27 for fixing said panel 1 to the same bar 91. The use of this variant of the structure of the invention therefore allows the panel 1 to be fixed to the wall 3 without requiring the use of the support 4 forming part of the embodiment illustrated in the previous figures.

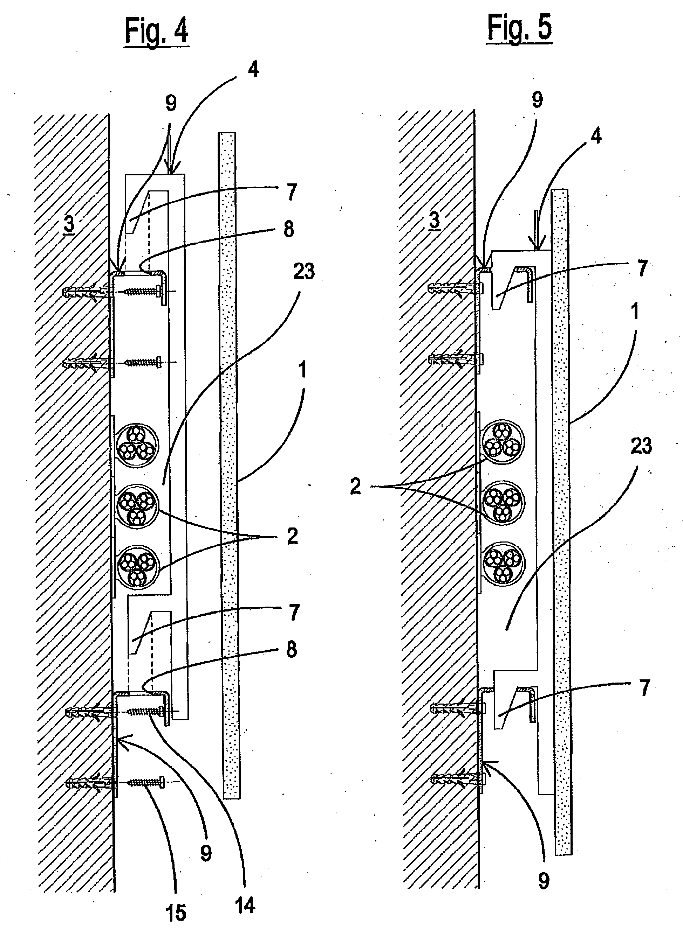

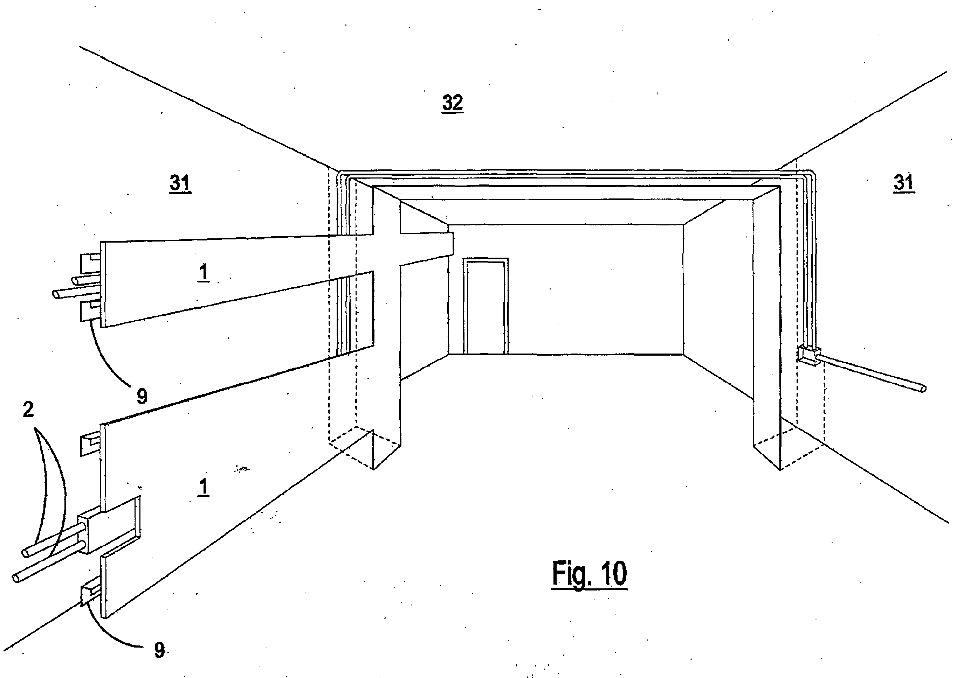

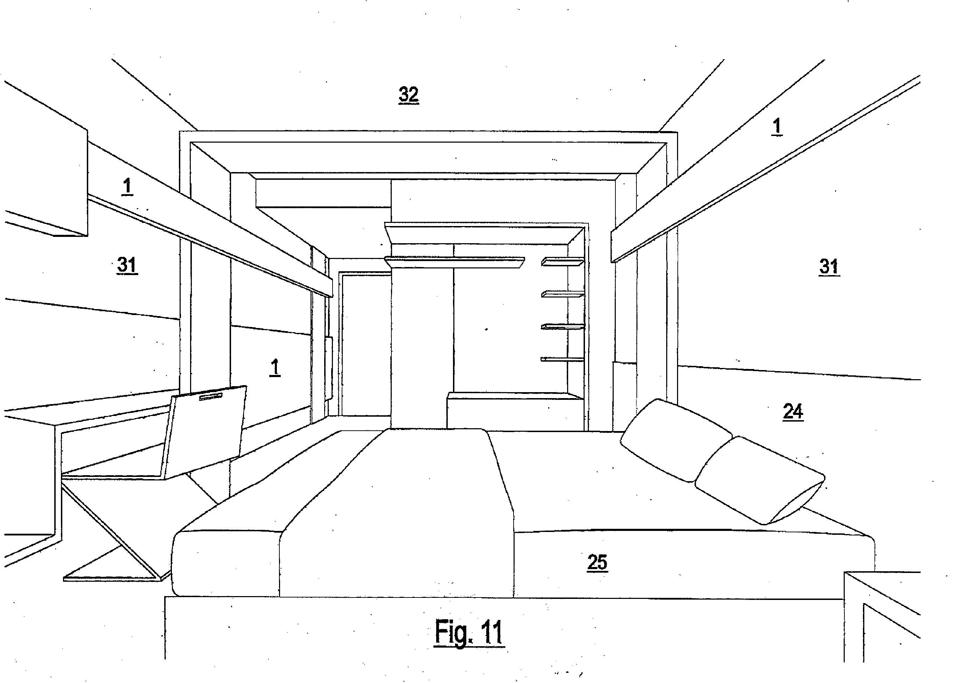

In its application, as illustrated in figures 10 and 11, the structure of the invention can have any configuration and orientation, following the track of the wiring 2 on the both vertical walls 31 and also on the horizontal walls 32. In particular, the wiring 2 runs in parallel alignment with the bars 9 which sustain said supports 4 on the wall, within the space 23 between the hooks 7 of figures 4 and 5.

In this way, according to a specific characteristic of the invention, the structure described has the role of a decorative element of the walls on which it is applied, as illustrated, for example, in figure 11, in which the panel 1 exerts the function not only of covering and containing the underlying wiring, but also of a headboard 24 for a bed 25.

The support 4 of figure 2 advantageously has a recessed wall 21, suitable for creating a housing 22 for the head of the regulation screw 19. Furthermore, as can be seen in the above-mentioned illustrations, the wiring 2 runs in parallel alignment with the bars 9 which support said supports 4 on the wall, in a position within the space 23 existing between the hooks 7, as illustrated in the figures 4 and 5.

### METHOD OF ASSEMBLY

### Three-element composition (Figure 1)

Position the pair of bars 9 on the wall 3 with the help of levelling instruments, mark the drilling points of the holes 12 on the wall with the help of the exit 17, mark the drilling points 12 on the wall 3 with a pencil or pen, then remove the bars 9 and drill the holes with a drill having an adequate tip for the type of wall 3.

Reposition the bars 9 and fix them to the wall 3 by means of the screws 14, fix the bars 9 definitively by means of the screws 15 through the drilling points of the holes 13.

By inserting the hooks 7 in the specific slots 8, hang the support 4 to the bars 9, then screw the screw 19 to the support 4 through the hole 20 and the corresponding hole 18 of the bars 9, then with the help of levelling instruments, regulate by acting on the head of the screw 19 with a rotating action until the correct positioning of the support 4 has been obtained. Remove the support 4 from the anchoring bar 9 and proceed with anchoring the panel 1 to the same support with the use of the screws 6 screwed to the panel 1 through the holes 5.

Reposition the support 4 equipped with the panel 1 on the bar 9.

### Two-element composition (Figure 9)

Position the pair of bars 91 on the wall 3 with the help of levelling instruments, mark the drilling points of the holes 12 on the wall with the help of the exit 17, mark the drilling points 12 on the wall 3 with a pencil or pen, then remove the bars 91 and drill the holes with a drill having an adequate tip for the type of wall 3.

Reposition the bars 91 and fix them to the wall 3 by means of the screws 14, fix the bars 91 definitively by means of the screws 15 through the drilling points of the holes 13.

Partially screw the pair of screws 27 to the panel 1 to allow the space necessary for anchorage to the bars 91 through the holes 26.

Anchor the panel 1 to the bars 91.

## Claims

1. A structure for containing and covering walls (3) having external wiring (2), comprising modular means suitable, on the one hand, for containing said wiring and covering said walls, and on the other hand, for forming personalized decorative elements of the same walls, said means comprising a panel (1) for covering and containing said wiring (2), in addition to a bar (9,91) anchored to said wall (3), said structure further comprising a fixing support (4) of said panel (1) to said bar (9),
**characterized in that** said support (4) is provided with hooks (7) suitable for being engaged in corresponding slots (8) of said bar (9), said support (4) consisting of a profiled section provided with holes (5) for anchoring elements (6) of the same support (4) to the respective panel (1), and also a hole (20) for regulation means (19) of the inclination of said panel (1).

2. The structure according to claim 1, **characterized in that** said support (4) has a recessed wall (21), suitable for forming a housing cavity (22) of the head of said regulation means (19).

3. The structure according to claim 2, **characterized in that** said bar (9) has a substantially "L"-shaped section, on whose base (10) said slots (8) are positioned, on the longer branch (11), wall side (3), of the same "L"-shaped section, there being holes (12, 13) for anchoring and positioning means (14,15) of said bar (9) to the wall (3), the shorter branch (16) of said bar (9), panel side (1), on the other hand, having an exit (17) for access to said means (14) and a hole (18) for housing said regulation means (19).

4. The structure according to claim 3, **characterized in that**, instead of said support (4), said bar (91) also comprises holes (26) for corresponding fixing means (27) of the panel (1) to the same bar (9).

5. The structure according to one or more of the previous claims, **characterized in that** it has a free space (23) for housing said wiring (2).

6. A wall, **characterized in that** it is provided with a structure according to one or more of the previous claims.

## Patentansprüche

1. Konstruktion zur Aufnahme einer außenliegenden Verkabelung (2) und zum Verkleiden von Wänden (3), die eine solche aufweisen, umfassend modulare Mittel, die geeignet sind, einerseits die Verkabelung aufzunehmen und die Wände zu verkleiden, und andererseits individuell angepasste, dekorative Elemente derselben Wände zu bilden, wobei die Mittel ein Paneel (1) zum Verkleiden und Aufnehmen der Verkabelung (2) zusätzlich zu einem Stab (9, 91), der an der Wand (3) verankert ist, umfassen, und die Konstruktion ferner einen Befestigungsträger (4) des Paneels (1) an dem Stab (9) umfasst, **dadurch gekennzeichnet, dass** der Träger (4) mit Haken (7) versehen ist, die zum Eingriff in entsprechende Schlitze (8) des Stabes (9) geeignet sind, wobei der Träger (4) aus einem profilierten Querschnitt besteht, der mit Löchern (5) für Verankerungselemente (6) desselben Trägers (4) an dem jeweiligen Paneel (1) und auch einem Loch (20) für Regulierungsmittel (19) der Neigung des Paneels (1) versehen ist.

2. Konstruktion nach Anspruch 1, **dadurch gekennzeichnet, dass** der Träger (4) eine zurückgesetzte Wand (21) aufweist, die zum Bilden eines Unterbringungshohlraums (22) des Kopfes der Regulierungsmittel (19) geeignet ist.

3. Konstruktion nach Anspruch 2, **dadurch gekennzeichnet, dass** der Stab (9) einen im Wesentlichen "L"-förmigen Querschnitt aufweist, an dessen Basis (10) die Schlitze (8) angeordnet sind, wobei an dem längeren Zweig (11), der Wandseite (3), desselben "L"-förmigen Querschnitts Löcher (12, 13) für Verankerungs- und Positioniermittel (14, 15) des Stabes (9) an der Wand (3) vorgesehen sind, wobei der kürzere Zweig (16) des Stabes (9), die Paneelseite (1), andererseits einen Ausgang (17) für einen Zugriff auf die Mittel (14) und ein Loch (18) zum Unterbringen der Regulierungsmittel (19) aufweist.

4. Konstruktion nach Anspruch 3, **dadurch gekennzeichnet, dass** anstelle des Trägers (4) der Stab (91) auch Löcher (26) für entsprechende Befestigungsmittel (27) des Paneels (1) an demselben Stab (9) umfasst.

5. Konstruktion nach einem oder mehreren der vorhergehenden Ansprüche, **dadurch gekennzeichnet, dass** sie einen Freiraum (23) zum Unterbringen der Verkabelung (2) aufweist.

6. Wand, **dadurch gekennzeichnet, dass** sie mit einer Konstruktion nach einem oder mehreren der vorhergehenden Ansprüche versehen ist.

## Revendications

1. Structure destinée à contenir et à couvrir des murs (3) comportant un câblage extérieur (2), comprenant un moyen modulaire approprié, d'une part, pour contenir ledit câblage et couvrir lesdits murs, et d'autre part pour former des éléments décoratifs personnalisés des mêmes murs, ledit moyen comprenant un panneau (1) pour couvrir et contenir ledit câblage (2), en plus d'une barre (9, 91) ancrée dans ledit mur (3), ladite structure comprenant en outre un support de fixation (4) dudit panneau (1) sur ladite barre (9),
**caractérisée en ce que** ledit support (4) est pourvu de crochets (7) adaptés pour être engagés dans des fentes correspondantes (8) de ladite barre (9), ledit support (4) consistant en une section profilée pourvue de trous (5) pour des éléments d'accrochage (6) du même support (4) au panneau respectif (1), et d'un trou (20) pour un moyen de réglage (19) de l'inclinaison dudit panneau (1).

2. Structure selon la revendication 1, **caractérisée en ce que** ledit support (4) comporte une paroi en retrait (21) appropriée pour former une cavité de logement (22) de la tête dudit moyen de réglage (19).

3. Structure selon la revendication 2, **caractérisée en ce que** ladite barre (9) a une section substantiellement en forme de L, sur la base (10) de laquelle lesdites fentes (8) sont positionnées, sur la grande branche (11), côté mur (3), de la même section en L se trouvent des trous (12, 13) pour un moyen d'accrochage et de positionnement (14, 15) de ladite barre (9) sur le mur (3), la petite branche (16) de ladite barre (9), côté panneau (1), d'autre part, comportant une sortie (17) permettant l'accès audit moyen (14) et un trou (18) pour loger ledit moyen de régulation (19).

4. Structure selon la revendication 3, **caractérisée en ce que**, au lieu dudit support (4), ladite barre (91) comprend aussi des trous (26) pour un moyen de fixation correspondant (27) du panneau (1) sur la même barre (9).

5. Structure selon l'une ou plusieurs des revendications précédentes, **caractérisée en ce qu'**elle comporte un espace libre (23) pour loger ledit câblage (2).

6. Mur **caractérisé en ce qu'**il est pourvu d'une structure selon l'une ou plusieurs des revendications précédentes.
